# EUROPEAN PATENT SPECIFICATION

(11) **EP 2 332 336 B1**
(45) Date of publication and mention of the grant of the patent: **13.08.2014**
(21) Application number: 08877324.7
(22) Date of filing: 15.12.2008
(51) Int. Cl.: H04N 19/597, H04N 21/218, H04N 21/4223, H04N 21/6587, H04N 21/81, H04N 19/67, H04N 19/167

(54) **MULTI-VIEW MEDIA DATA**
MEHRANSICHTSMEDIENDATEN
DONNÉES MULTIMÉDIA MULTIVUES

(30) Priority: 07.10.2008 US 103399 P
(43) Date of publication of application: 15.06.2011
(73) Proprietor: Telefonaktiebolaget L M Ericsson (publ), 164 83 Stockholm (SE)
(72) Inventor: FRÖJDH, Per, 113 39 Stockholm (SE); WU, Zhuangfei, 171 67 Solna (SE)
(74) Representative: Egrelius, Fredrik
(86) International application number: PCT/SE2008/051459
(87) International publication number: WO 2010/041998

(56) References cited:
- WO-A1-2007/114608
- WO-A1-2008/117963
- WO-A1-2008/117963
- WO-A1-2008/133455
- WO-A2-2008/023328
- US-A1- 2007 177 813

## Description

### TECHNICAL FIELD

The present invention generally relates to multi-view media data, and in particular to generation and processing of such multi-view media data.

### BACKGROUND

The ongoing standardization of Multi-View Video Coding (MVC) by Moving Picture Experts Group (MPEG) [1] and Telecommunication Standardization Sector (ITU-T) Study Group 16 (SG16) is a video coding technology which encodes video sequences produced by several cameras or a camera array. MVC exploits redundancy between the multiple video views in an efficient way to provide a compact encoded video stream. MVC is based on the Advanced Video Coding (AVC) standard, also known as ITU-T H.264, and consequently the MVC bit stream syntax and semantics have been kept similar to the AVC bit stream syntax and semantics.

ISO/IEC 14496-15 [2] is an international standard designed to contain AVC bit stream information in a flexible and extensible format that facilitates management of the AVC bit stream. This standard is compatible with the MP4 File Format [3] and the 3GPP File Format [4]. All these standards are derived from the ISO Base Media File Format [5] defined by MPEG. The storage of MVC video streams is referred to as the MVC file format.

In the MVC file format, a multi-view video stream is represented by one or more video tracks in a file. Each track represents one or more views of the stream. The MVC file format comprises, in addition to the encoded multi-view video data itself, metadata to be used when processing the video data. For instance, each view has an associated view identifier implying that the MVC Network Abstraction Layer (NAL) units within one view have all the same view identifier, i.e. same value of the view_id fields in the MVC NAL unit header extensions.

The MVC NAL unit header extension also comprises a priority_id field specifying a priority identifier for the NAL unit. In the proposed standards [6], a lower value of the priority_id specifies a higher priority. The priority_id is used for defining the NAL unit priority and is dependant on the bit stream as it reflects the inter-coding relationship of the video data from different views.

### SUMMARY

The priority identifiers used today merely specify inter-coding relationships of the video data from the camera views provided in the MVC file. Such encoding-related priorities are, though, of limited use for achieving a content-based processing of the video data from the different camera view.

The present embodiments overcome these and other drawbacks of the prior art arrangements.

It is a general objective to provide multi-view media data that can be more efficiently processed.

This and other objectives are met by the embodiments as defined by the accompanying patent claims.

Briefly, a present embodiment involves generating multi-view media data by providing encoded media data representative of multiple media views of a scene. Each of the media views is associated with a respective structural priority identifier. The structural priority identifier is representative of the encoding inter-relationship of the media data of the associated media view relative media data of at least another media view. Thus, the structural priority identifiers are dependent on the bit stream in so far that they relate to the encoding of the media data and provide instructions of the hierarchical level of inter-view predictions used in the media data encoding.

A content priority identifier is determined for each media view of at least a portion of the multiple media views. In clear contrast to the structural priority identifiers, a content priority identifier is representative of the rendering importance level of the media data of the associated media view. The determined content priority identifier is associated to the relevant media view, for instance by being included in one or more data packets carrying the media data of the media view or being connected to a view identifier indicative of the media view.

The encoded media data may optionally be included as one or more media tracks of a media container file. The structural priority identifiers and the content priority identifiers are then included as metadata applicable to the media track or tracks during processing of the media data.

The content priority identifiers allow a selective and differential content-based processing of the multi-view media data at a data processing device. In such a case, a media data subset of the encoded media data is selected based on the content priority identifiers and preferably also based on the structural priority identifiers. Processing of media data is then solely applied to the selected media data subset or another type of media data processing is used for the selected media data subset as compared to remaining media data.

### SHORT DESCRIPTION OF THE DRAWINGS

The embodiments together with further objects and advantages thereof, may best be understood by making reference to the following description taken together with the accompanying drawings, in which:
Fig. 1 is a flow diagram illustrating a method of generating multi-view media data according to an embodiment;
Fig. 2 is a schematic illustration of an array of cameras that can be used for recording multi-view video data;
Fig. 3 is a flow diagram illustrating additional steps of the media data generating method in Fig. 1;
Fig. 4 is a schematic illustration of a media container file according to an embodiment;
Fig. 5 is a schematic block diagram of a media generating device according to an embodiment;
Fig. 6 is a flow diagram illustrating a method of processing multi-view media data according to an embodiment;
Figs. 7 to 11 are flow diagram illustrating different embodiments of the processing step of the media data processing method in Fig. 6;
Fig. 12 is a schematic block diagram of a data processing device according to an embodiment;
Fig. 13 is a schematic block diagram of a data processing device according to another embodiment; and
Fig. 14 is an overview of an example of communication system in which the embodiments can be implemented.

### DETAILED DESCRIPTION

Throughout the drawings, the same reference characters will be used for corresponding or similar elements.

The present embodiments generally relate to generation and processing of so-called multi-view media data and in particular to provision of priority information and usage of such priority information in connection with the media data processing.

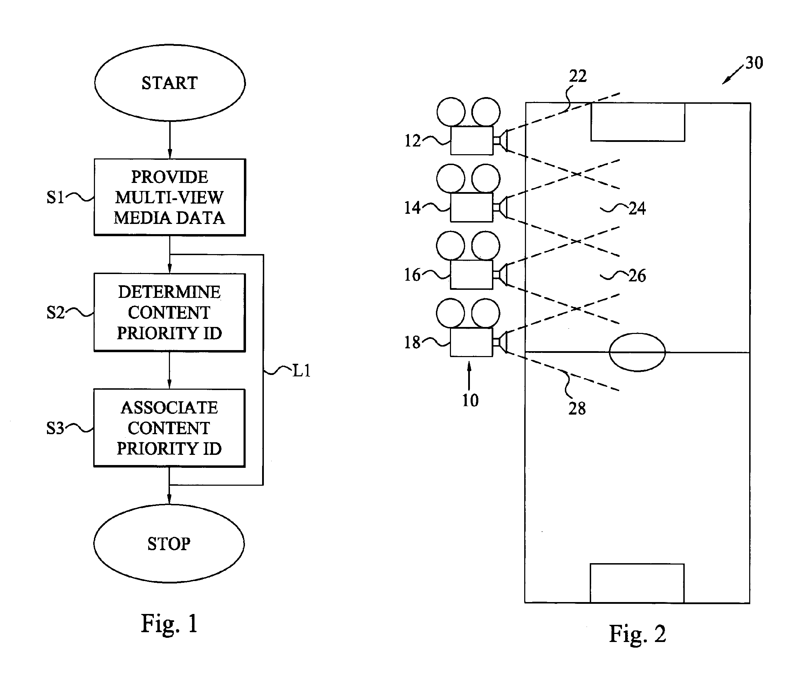

Multi-view media data implies that multiple media views of a media content are available, where each such media view generates media data representative of the media content but from one of multiple available media views. A typical example of such multi-view media is multi-view video. In such a case, multiple cameras or other media recording/creating equipment or an array of multiple such cameras are provided relative a scene to record. As the cameras have different positions relative the content and/or different pointing directions and/or focal lengths, they thereby provide alternative views for the content. Fig. 2 schematically illustrates this concept with an array 10 of multiple cameras 12-18 positioned next to a scene 30, e.g. a football field where a football match is to be recorded by the different cameras 12-18. The figure also indicates the respective camera views 22-28 of the cameras 12-18. The cameras 12-18 are, in this illustrative example, positioned at different positions along the length of the football field and therefore record different portions of the field. This means that the cameras 12-18 capture different versions of the media content as seen from their respective camera views 22-28.

As is well known in the art, video data encoding is typically based on relative pixel predictions, such as in H.261, H.263, MPEG-4 and H.264. In H.264 there are three pixel prediction methods utilized, namely intra, inter and bi-prediction. Intra prediction provides a spatial prediction of a current pixel block from previously decoded pixels of the current frame. Inter prediction gives a temporal prediction of the current pixel block using a corresponding but displaced pixel block in a previously decoded frame. Bi-directional prediction gives a weighted average of two inter predictions. Thus, intra frames do not depend on any previous frame in the video stream, whereas inter frames, including such inter frames with bi-directional prediction, use motion compensation from one or more other reference frames in the video stream.

Multi-view video coding has taken this prediction-based encoding one step further by not only allowing predictions between frames from a single camera view but also inter view prediction. Thus, a reference frame can be a frame of a same relative time instance but belonging to another camera view as compared to a current frame to encode. A combination of inter-view and intra-view prediction is also possible thereby having multiple reference frames from different camera views.

This concept of having multiple media views and inter-encoding of the media data from the media views is not necessarily limited to video data. In clear contrast, the concept of multi-view media can also be applied to other types of media, including for instance graphics, e.g. Scalable Vector Graphics (SVG). Actually, embodiments of the invention can be applied to any media type that can be represented in the form of multiple media views and where media encoding can be performed at least partly between the media views.

In the art and as disclosed in the MVC standard draft [6], priority in the form of so-called priority_id is included in the NAL unit header. In a particular case, all the NAL unit belonging to a particular view could have the same priority_id, thus giving a sole prior art priority identifier per view. These prior art priority identifiers can be regarded as so-called structural priority identifiers since the priority identifiers are indicative of the encoding inter-relationship of the media data from the different media views. For instance and with reference to Fig. 2, assume that the camera view 26 is regarded as the base view. This means that the camera view 26 is an independent view, which is encoded and can be decoded from its own video data without any predictions from the other camera views 22, 24, 28. The two adjacent camera views 24, 28 may then be dependent on the base view 26, implying that video data from these camera views 24, 28 may be predicted from video data from the base view 26. Finally, the last camera view 22 could be dependent on the neighboring camera view 24. These dependency aspects give a structural priority as follows:

**Table I - structural priority identifiers**

| | | | | |
|---|---|---|---|---|
| Camera view* | 22 | 24 | 26 | 28 |
| Structural priority identifier | 3 | 2 | 1 | 2 |

| | | | | |
|---|---|---|---|---|
| * Camera view reference number according to Fig. 2 | | | | |

In Table I as in the proposed standard [6], a lower value of the structural priority identifier specifies a higher priority. Thus, the base view 26 is given the lowest structural priority identifier and with the two camera views 22, 28 being encoded in dependency on the base view 26 having the next lowest structural priority identifier. The camera view 22 that is being encoded in dependency on one of the camera views 24, 28 with the second lowest structural priority identifier therefore has the highest structural priority identifier of the four camera views in this example.

The structural priority identifiers are, thus, dependant on the bit stream as they reflect the inter-coding relationship of the video data from different camera views. The embodiments provide and use an alternative form of priority identifiers that are applicable to multi-view media and are instead content dependant.

Fig. 1 is a flow diagram illustrating a method of generating multi-view media data according to an embodiment. The method starts in step S1 where encoded data representative of multiple media views of a media content is provided. Each of these multiple media views is associated with a respective structural priority identifier as discussed above. Thus, a structural priority identifier is indicative of the encoding inter-relationship of the media data of the media view relative media data of at least one another media view of the multiple media views.

This multi-view media data provision of step S1 can be implemented by fetching the media data from an accessible media memory, in which the media data previously has been entered. Alternatively, the media data is received from some other external unit, where the media data has been stored, recorded or generated. A further possibility is to actually create and encode the media data, such as recording a video sequence or synthetically generating the media data.

A next step S2 determines a so-called content priority identifier for a media view of the multiple available media views. In clear contrast to the structural priority identifiers that are dependent on encoding inter-relationships between the media views, the content priority identifier determined in step S2 is indicative of a rendering importance level of the media data of the media view. Thus, the content priority identifiers are more relating to the actual media content and provide priorities to the media views relative how important the media data originating from one of the media view is in relation to the media data from the other media views.

With anew reference to Fig. 2, it is generally regarded as being of more value for a viewer to see video data relating to the area around one of the goals in the football field. Thus, the camera view 12 will therefore typically be regarded as being of highest priority from content and rendering point of view. In line with how structural priority identifiers are organized, the content priority identifier of the camera view 12 would therefore have the lowest priority value corresponding to the highest priority, see Table II.

**Table II - content priority identifiers**

| | | | | |
|---|---|---|---|---|
| Camera view* | 22 | 24 | 26 | 28 |
| Content priority identifier | 1 | 2 | 3 | 4 |

| | | | | |
|---|---|---|---|---|
| * Camera view reference number according to Fig. 2 | | | | |

Thus, from a rendering point of view, the closer the camera view is to the most interesting portion of the football field, i.e. the goal, the higher content priority and the lower the content priority identifier of the camera view.

In an alternative approach, the higher structural/content priority of a media view, the higher structural/content priority identifier value.

The determined content priority identifier from step S2 is then associated to and assigned to the relevant media view of the multiple media views in step S3. This association can be implemented by storing the content priority identifier together with a view identifier of the media view. Alternatively, the content priority identifier is stored together with the media data from the relevant media view.

The content priority identifier is determined for at least a portion of the multiple media views, which is schematically illustrated by the line L1. This means that the loop formed by steps S2 and S3 can be conducted once so that only one of the media views have a content priority identifier. Preferably, the steps S2 and S3 are determined multiple times and more preferably once for each media view of the multiple media views. Thus, if the multi-view media data has been recorded from M media views, steps S2 and S3 can be conducted N times, where 1 ≤ N ≤ *M* and *M* ≥ 2.

The method then ends.

The content priority identifier is indicative of the rendering or play-out importance level of the media data from the media view to which the content priority identifier is associated. As was discussed above in connection with Fig. 2, the value of the content priority identifier can therefore be determined based on the recording positions of the multiple media views relative the recorded scene. Thus, the positions, focal directions and/or focal lengths of the cameras 12-18 of the camera views 22-28 can be used for determining the respective content priority identifiers of the camera views 22-28. An additional or alternative parameter that can be used for determining content priority identifiers is the resolution at which different cameras 12-18 record a scene 30. Generally, it is of higher rendering importance to have high resolution video data of a scene 30 as compared to a lower resolution version of the video data.

The content priority identifiers of the embodiments can be determined by the content provider recording and/or processing, such as encoding, the multi-view media data. For instance, a manual operator can, by inspecting the recorded media data from the different media views, determine and associate content priority identifiers based on his/her opinions of which media view or views that is or are regarded as being more important for a viewing user during media rendering as compared to other media views.

The determination of content priority identifiers can also be determined automatically, i.e. without any human operations. In such a case, any of the above mentioned parameters, such as camera position, focal direction, focal length, camera resolution, can be used by a processor or algorithm for classifying the camera views into different content priority levels.

The determined content priority identifiers are, as the structural priority identifiers, typically static, implying that a single content priority identifier is associated with a camera view for the purpose of a recorded content. However, sometimes it may be possible that rendering importance level of media data from different media views may actually change over time. In such a case, content priority identifiers can be associated with a so-called time to live value or be designed to apply for limited period of time or for a limited amount of media frames. For instance, a media view could have a first content priority identifier for the first f media frames or the first *m* minutes of media content, while a second, different content priority identifier is used for the following media frames or the remaining part of the media data from that media view. This can of course be extended to a situation with more than one change between content priority identifiers for a media view.

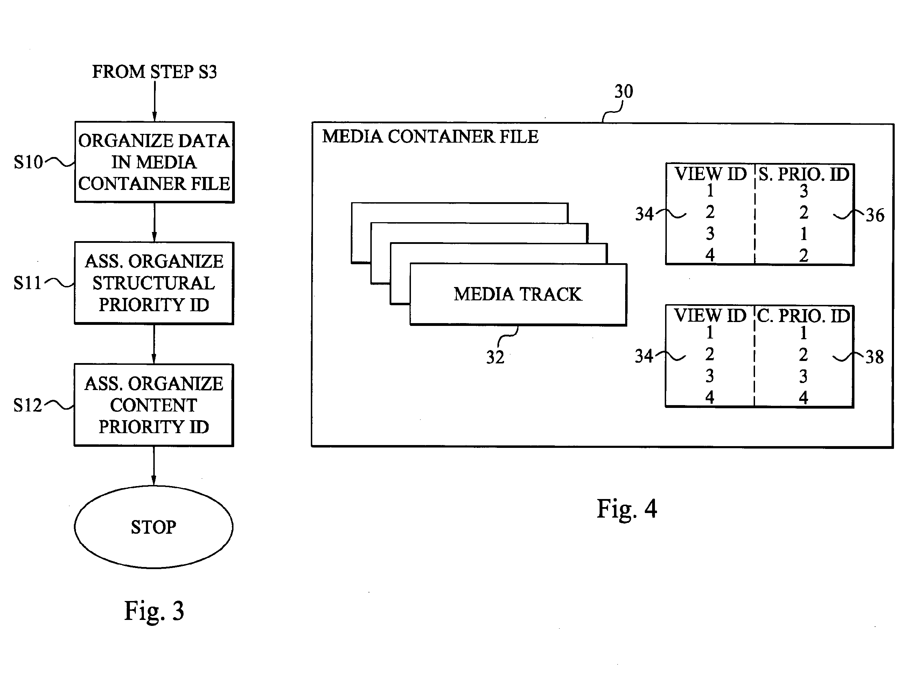

Fig. 3 is a flow diagram illustrating optional, additional steps of the method of generating multi-view media data. The method continues from step S3 of Fig. 1. A next step S10 organizes the encoded media data of the multiple media views as at least one media track of a media container file. The media container file can, for instance, be a so-called MVC file or some other file format that is preferably based on the ISO Base Media File Format.

The media container file can be regarded as a complete input package that is used by a media server during a media session for providing media content and forming media data into transmittable data packets. Thus, the container file preferably comprises, in addition to the media content per se, information and instructions required by the media server for performing the processing and allowing transmission of the media content during a media session.

In an embodiment, each media view has a separately assigned media track of the container file, thereby providing a one-to-one relationship between the number of media views and the number of media tracks. Alternatively, the media data of at least two, possibly all, media views can be housed in a single media track of the media container file. Fig. 4 schematically illustrates an example of a media container file 30 having one or more media tracks 32 carrying the encoded multi-view media data.

The respective media data of the multiple media views, irrespective of being organized into one or more media tracks, is preferably assigned respective view identifiers associated with the media views.

A next step S11 of Fig. 3 associatively organizes the structural priority identifiers in the media container file relative the at least one media track from step S10. Associatively organize implies that a structural priority identifier is included in the media container file in such a way as to provide an association between the structural priority identifier and the media view to which the structural priority identifier applies. Correspondingly, such an association can instead be between the structural priority identifier and the media data originating from the media view to which the structural priority identifier applies.

The association can be in the form of a pointer from the storage location of the media data of the media view within the media container file to the storage location of the structural priority identifier, or vice versa. This pointer or metadata therefore enables, given the particular media data or its location within the media container file, identification of the associated structural priority identifier or the storage location of the structural priority identifier within the file. Instead of employing a pointer, the metadata can include a view identifier of the media data/media view. The metadata is then used to identify one of the media data to which the structural priority identifier apply.

Fig. 4 schematically illustrates an embodiment of associatively organizing the structural priority identifiers 36 in the media container file 30. In this embodiment, each structural priority identifier 36 is associated with a view identifier 34 indicating the media data and media view to which the structural priority identifier 36 applies.

The next step S12 of Fig. 3 correspondingly associatively organizes the content priority identifier or identifiers in the media container file relative the at least one media track. In similarity to the structural priority identifiers, the association can be realized by metadata, such as view identifiers providing the connection between media data/media view and content priority identifier in the media container file. This is also illustrated in Fig. 4, where each content priority identifier 38 is associated with a view identifier 34 indicating the media data and media view to which the content priority identifier 36 applies.

A non-limiting example of providing content priority identifiers to a media container file is to include a box "vipr" in Sample Group Description Box of the media container file [6].
Box Types: 'vipr'
Container: Sample Group Description Box ('sgpd')
Mandatory: No
Quantity: Zero or more 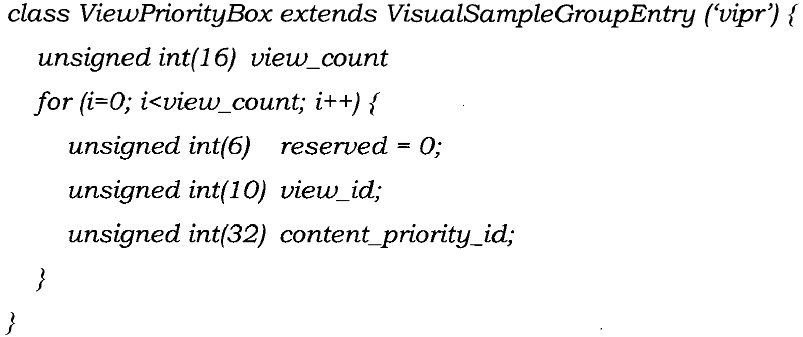
where *view_count* is the total number of media views, *view_id* is the view identifier of the media view as indicated in ViewIdentifierBox in document [6] and *content_priority_id* is the content priority identifier.

Alternatively, the box "vipr" could be provided in the Sample Entry of the media container file.
Box Types: 'vipr'
Container: Sample Entry ('avc1', 'avc2', 'mvc1')
Mandatory: No
Quantity: Exactly one

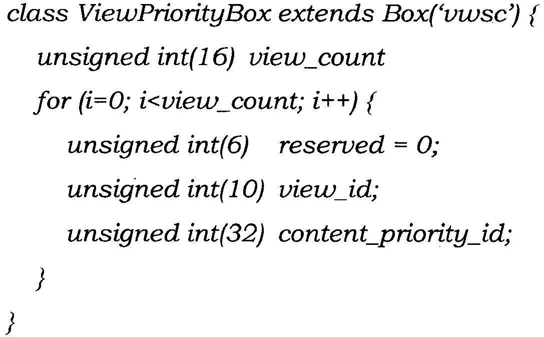

The additional steps S10 to S12 of Fig. 3 can be conducted in the order disclosed in the figure. Alternatively, any other sequential order of the operation steps S10-S12 can be used. The steps S10-S12 may also be performed in parallel or at least partly in parallel.

The structural and content priority identifiers included in the media container file in addition to the media tracks can be regarded as metadata that can be used during processing of the multi-view media data in the media tracks. Thus, the priority identifiers are applicable to and useful as additional data for facilitating the processing of the formed media container file as is further described herein.

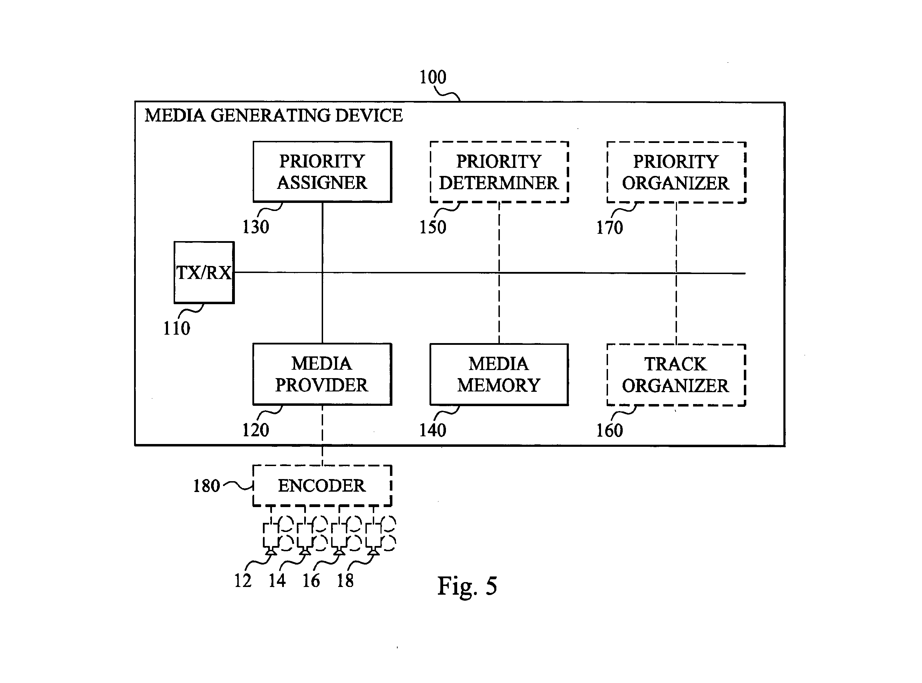

Fig. 5 is a media generating device 100 for generating multi-view media data according to an embodiment. The media generating device 100 comprises a media provider 120 implemented for providing encoded media data representative of multiple media views of a media content. Each media view is associated with a structural priority identifier indicative of the encoding inter-relationship of the media data of the media view relative media data of at least another media view. The media provider 120 can be connected to an internal or external media engine comprising equipment 12-18 for recording or generating the media data of the multiple media views and an encoder 180 for encoding the recorded or generated media data. Alternatively, the media provider 120 receives the media data, typically in a coded form or as uncoded media data, from a connected receiver 110 of the media generating device 100. The receiver 110 then receives the media data through a wired or wireless communication from an external terminal in the communication system. As a further alternative, the media provider 120 can fetch the multi-view media data from a connected media memory 140 of the media generating device 100.

A priority assigner 130 is implemented in the media generating device 100 for assigning content priority identifiers to one or more of the multiple media views. The content priority identifiers are indicative of the rendering importance levels of the media data of the multiple media views. The priority assigner 130 may receive the content priority identifiers from an external source, such as through the receiver 110. Alternatively, the content priority identifiers can be input manually by a content creator, in which case the priority assigner 130 includes or is connected to a user input and fetches the content priority identifiers from the user input.

In a further embodiment, the media generating device 100 comprises a priority determiner 150 connected to the priority assigner 130. The priority determiner 150 is arranged for determining a content priority identifier for at least one media view of the multiple media views. The priority determiner 150 preferably uses input parameters, such as from the media engine, the media provider 120, the receiver 110 or a user input, relating to the cameras 12-18 or equipment used for recording or generating the multi-view media data. These input parameters include at least one of camera position relative recorded scene, focal direction, focal length and camera resolution.

The determined content priority identifiers are forwarded from the priority determiner 150 to the priority assigner 130, which assigns them to the respective media views. Each media view therefore preferably receives an assigned content priority identifier by the priority assigner 130, though other embodiments merely assign the content priority identifiers to a subset of at least one media view of the multiple media views.

An optional track organizer 160 is provided in the media generating device 100 and becomes operated if the multi-view media data from the media provider 120 is to be organized into a media container file. In such a case, the track organizer organizes the encoded media data from the media provider 120 as at least one media track in the media container file.

A priority organizer 170 is preferably implemented in the media generating device 100 for organizing priority identifiers in the media container file. The priority organizer 170 therefore associatively organizes the structural priority identifiers and the content priority identifiers in the media container file relative the one or more media tracks. In such a case, the priority organizer 170 preferably stores each of the structural and content priority identifiers together with a respective view identifier representing the media view and media data to which the structural or content priority identifier applies.

The media container frame generated according to an embodiment of the media generating device 100 can be entered in the media memory 140 for a later transmission to an external unit that is to forward or process the media container file. Alternatively, the media container file can be directly transmitted to this external unit, such as a media server, transcoder or user terminal with media rendering or play-out facilities.

The units 110-130 and 150-170 of the media generating device 100 may be provided in hardware, software or a combination of hardware and software. The media generating device 100 may advantageously be arranged in a network node of a wired or preferably wireless, radio-based communication system. The media generating device 100 can constitute a part of a content provider or server or can be connected thereto.

The content priority identifiers determined and assigned to multi-view media data as discussed above provide improved content-based processing of the multi-view media data as compared to corresponding multi-view media data that merely has assigned structural priority identifiers.

For instance, assume a video recording arrangement as illustrated in Fig. 2 with four video recording cameras. Structural priority identifiers are assigned as discussed above and illustrated in Table I and content priority identifiers are assigned as illustrated in Table II. Table III is basically a merge between Table I and Table II and lists both the structural and content priority identifiers for the example illustrated in Fig. 2.

**Table III -priority identifiers**

| | | | | |
|---|---|---|---|---|
| Camera view* | 22 | 24 | 26 | 28 |
| Structural priority identifier | 3 | 2 | 1 | 2 |
| Content priority identifier | 1 | 2 | 3 | 4 |

| | | | | |
|---|---|---|---|---|
| * Camera view reference number according to Fig. 2 | | | | |

Assume a situation where media data corresponding to one of the media views has to be pruned and discarded, for instance, due to limited storage capability and/or limited bandwidth when transmitting the encoded multi-view media data.

According to the prior art techniques, media data is discarded based solely on the structural priority identifiers. This means that the media data from the media view 22 and camera 12 being positioned closest to one of the goals of the football field will be discarded as it has highest assigned structural priority identifier and therefore lowest structural priority. However, in reality this camera view 22 is typically regarded as being the most important one as it is closer to the goal and is the only camera view of the four illustrated camera views 22-28 that will capture any goal made during the football match.

However, by also utilizing the content priority identifiers in the media processing, i.e. media pruning in this example, a more correct media processing from a media rendering point of view is achieved. Thus, using only the content priority identifiers or indeed both the content priority identifiers and the structural priority identifiers in the media pruning, the media data originating from the media view 28 will be discarded as it has the highest content priority identifier and also the highest total priority identifier, i.e. content priority identifier plus structural priority identifier. Removing media data from the media view 28 instead of the media view 22 closest to the goal is much more preferred from a viewing user's point of view when the scoring of a goal is regarded as the most interesting part to see of a football match.

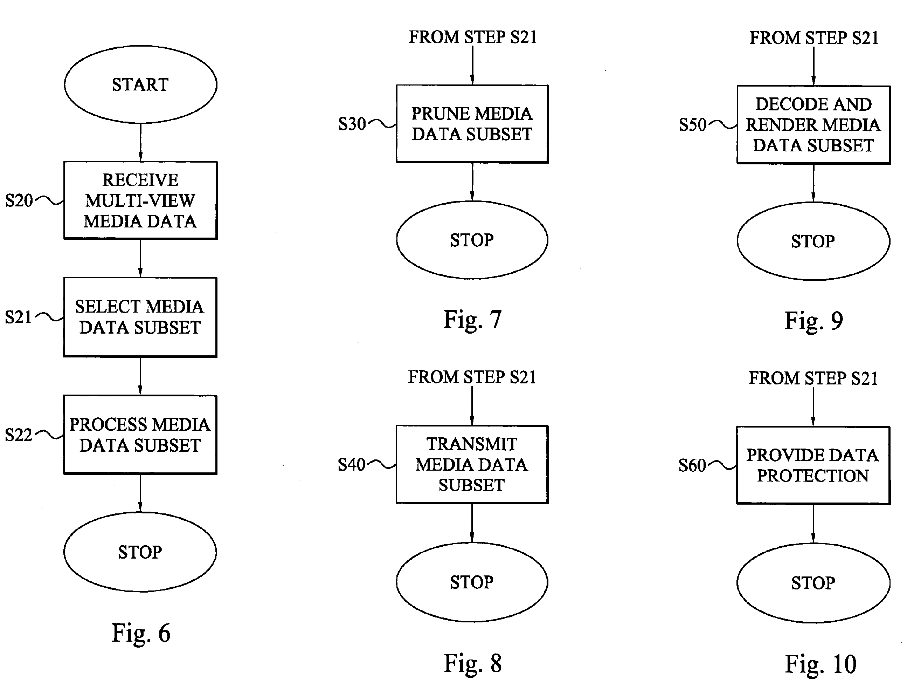

Fig. 6 is a flow diagram illustrating a method processing multi-view media data according to an embodiment. The method starts in step S20, where encoded media data representative of multiple media views of media content is received. This data reception may be in the form of receiving data packets of the encoded media data from a media server or content provider. Alternatively, the media data can be included in a media container file that is received in the form of a number of data packets. Each of the media views relating the media data has a respective structural priority identifier and at least a portion of the media views further has a respective content priority identifier as previously described.

The next step S21 selects a media data subset of the received multi-view media data. Thus, this step S21 selects media data corresponding to a subset of the multiple media views. As a consequence, step S21 selects media data from *P* media views, where 1≤*P*<M and *M* represents the total number of media views for the present multi-view media data.

The subset selection is furthermore performed at least partly based on the at least one content priority identifier associated with the media views. Step S21 can be conducted solely based on the content priority identifiers but is preferably also based on the structural priority identifiers. This is in particular advantageous when pruning or discarding media data as otherwise media data from a base view could be discarded when only regarding the content priority identifiers, thereby making the remaining media data undecodable.

The selected media data subset from step S21 is further processed in step S22. Thus, the content priority identifier of the embodiments is used to classify media data from different views to thereby achieve a differential media data processing by processing only a subset of the media data or optionally applying at least one other form of processing to remaining media data of the multi-view media data.

The method then ends.

Figs. 7 to 11 illustrate different embodiments of differential processing that can be conducted in response to the priority-based media selection.

In Fig. 7 some of the media data of the multi-view media data has to be pruned or discarded, such as from the media container file. This may be necessary in order to reduce the total size in terms of bits of the encoded multi-view media data in storage-limited applications. An alternative but related situation is when it is necessary or at least desirable to remove some of the media data for the purpose of reducing the amount of data that is transmitted to a receiver. Such bandwidth-limited application often arise in wireless, radio-based communication systems, where the available amount of communication resources, such as time slots, frequencies, channel or spread-spectrum codes, etc., is limited.

Step S30 of Fig. 7 performs the pruning and discarding of the media data subset selected in step S21 of Fig. 6. Thus, the media data of the encoded multi-view data to discard is based at least partly on the content priority identifiers and preferably based on these identifiers and the structural priority identifiers. Instead of also using the structural priority identifiers in addition to the content priority identifiers in selecting the media data to prune, other information descriptive of the coding dependency of the media data from the different use could be used together with the content priority identifiers.

Fig. 8 is an alternative embodiment of the data processing step. This embodiment is also applicable in bandwidth-limited applications. However, in contrast to Fig. 7, media data is not necessarily discarded. In clear contrast, the subset of media data selected in Fig. 6 based on the content priority identifiers is wiredly or wirelessly transmitted to another terminal, network node or unit having receiving capability in step S40. Remaining media data is then not sent to the unit or is possibly sent at a later occasion.

If a terminal has rendering capability, such as a media player, but cannot or selects not to decode and render all the multi-view media data, the content priority identifiers can be used for selecting the media data subset to decode and render in step S50 of Fig. 9. Step S50 can be used, for instance, when the media player can only render media data from a single media view or from a set of media views. It is then important that the decoded and played media has as high level of importance for a viewing user as possible. Though note that even though media data of a subset of the media views is decoded and rendered in step S50 that media data might require the decoding but not necessarily the rendering of media data of another media view not included in the subset, due to inter-view predictions in the media coding and decoding. For example, a base view not selected to be included in the media data subset could be needed to decode one of the media views that should be both decoded and rendered.

Data protection is often applied to media data and data packets transmitted over radio-based networks to combat the deleterious effects of fading and interferences. Generally, the higher level of data protection, the more extra or overload data is needed. It is therefore a balance between protection level and extra overhead. The content priority identifiers can advantageously be used as a basis for identifying the media data in a multi-view arrangement that should have the highest level of data protection. Thus, media data that have low content priority identifiers and are therefore regarded as being of high rendering importance can have first level of data protection in step S60 of Fig. 10, while less important media data from other media views can have a second, lower level of data protection. This may of course be extended to a situation providing more than two different levels of data protection.

Examples of such data protection that can be used in connection with this embodiment are Forward Error Correction (FEC), checksum, Hamming code, Cyclic Redundancy Check (CRC), etc., which are suitable for real time transmission as any error can be corrected instantaneously.

For non-real time applications, Automatic Repeat Request (ARQ), such as in TCP/IP (Transmission Control Protocol/Internet Protocol), where retransmissions are required when error occur, can also be used for providing data protection.

Encryption is another type of high level data protection that could be considered herein. In such a case, the content priority identifiers can be used to determine to what extend the strength of encryption protection should be applied.

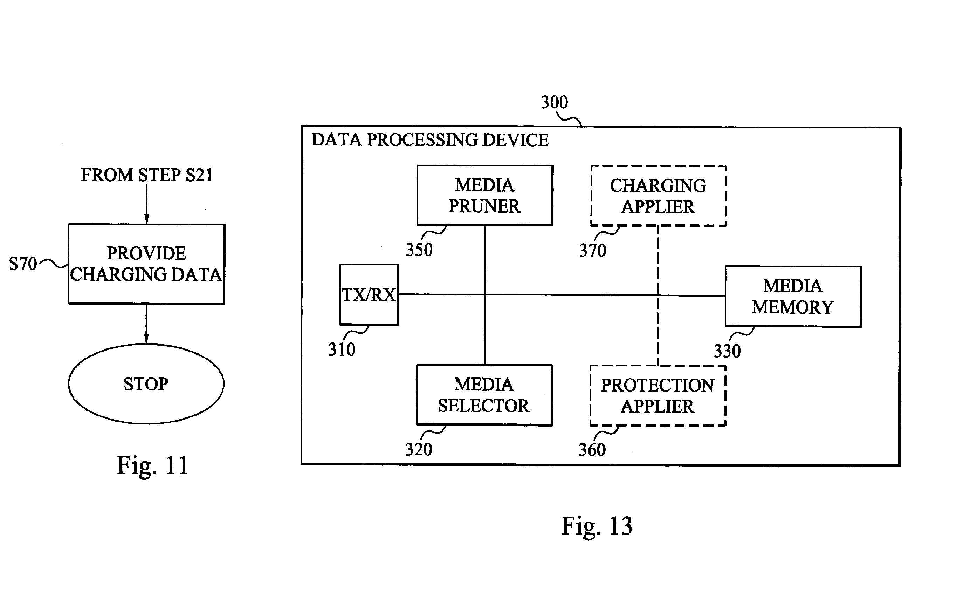

The content priority can also be used for providing a differential charging of provided media content. Thus, media data from media views that are regarded as being of higher rendering relevance and importance for buying viewers can be charged differently, i.e. at a higher cost, than less important media data, which has comparatively higher content priority identifiers. This concept is illustrated in Fig. 11, where step S70 provides charging information for the multi-view media data based at least partly on the content priority identifiers.

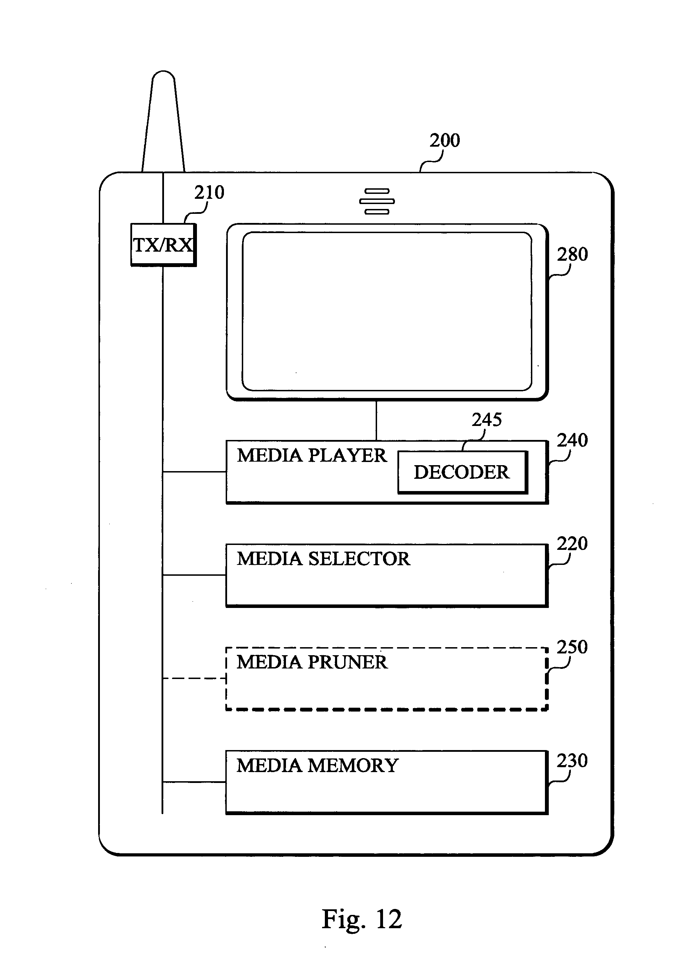

Fig. 12 is a schematic illustration of an embodiment of a data processing device 200 for processing multi-view media data. In the figure, the data processing device 200 has non-limitedly been illustrated in the form of a user terminal having media playing functionality. Such a user terminal 200 may, for instance, be a portable user terminal of a wireless communication system, such as a mobile telephone, Personal Digital Assistance, laptop with communication equipment, etc. Other examples of user terminals that can benefit from the invention include computers, game consoles, TV decoders and other equipment adapted for processing and rendering multi-view media data. Furthermore, the data processing device 200 does not necessarily have to be a media rendering device. In clear contrast, the data processing device 200 could use the content priority identifiers as disclosed herein for other processing purposes.

The data processing device 200 comprises a receiver 210 for receiving encoded media data representative of multiple media views of a media content. The media data, carried in a number of data packets, may be in the form of a media container file comprising, in addition to the encoded media data in at least one media track, metadata applicable during processing of the media data. This metadata comprises, among others, the structural and content priority identifiers described herein. If the multi-view media data is not provided in the form of a media container file, the media data from each media view comprises in at least one of its data packets, such as in the header thereof, the structural and content priority identifier applicable to that media view.

The data processing device 200 also comprises a media selector 220 arranged for selecting a media data subset of the received multi-view media data. The media selector 220 retrieves the content priority identifiers for the different media views associated with the media data and preferably also retrieves the structural priority identifiers. The media selector 220 uses the retrieved content priority identifiers and preferably the structural priority identifiers for identifying and selecting the particular media data subset to further process.

The further processing of the media data of the selected media data subset may be conducted by the user processing device 200 itself or by a further device connected thereto. For instance, the data processing device 200 can comprise a media pruner 250 for pruning and discarding media data corresponding to one or a subset of all media views of the multi-view media data. The media pruner 250 then prunes the media data subset selected by the media selector 220 based at least partly on the content priority identifiers.

The pruning of the media data may be required to reduce the total bit size of the multi-view media data when storing it on a media memory 230 or reducing the bandwidth when transmitting it by a transmitter 210 of the data processing device 200.

The data processing device 200 can be adapted for decoding the received media data and then render it on an included or connected display screen 280. In such a case, a decoder 245 could operate to only decode the media data subset selected by the media selector 220. The decoded media data is rendered by a media player 240 and is therefore displayed on the display screen 280. In an alternative approach, the decoder 245 may decode more media data than the selected media data subset. However, the media player 240 merely renders the media data corresponding to the media data subset selected by the media selector 220. Any non-rendered but decoded media data could be required for decoding at least some of the media data in the selected media data subset due to any inter-view predictive encoding/ decoding.

The units 210, 220, 240 and 250 of the data processing device 200 may be provided in hardware, software or a combination of hardware and software.

Fig. 13 is a schematic block diagram of another embodiment of a data processing device 300. This data processing device 300 can be implemented in a network node, such as base station, of a wireless communication system or network. In similarity to the embodiment illustrated in Fig. 12, the data processing device 300 of Fig. 13 comprises a transmitter/receiver (TX/RX) 310 for transmitting and receiving data. The data processing device 300 further comprises a media selector 320, a media memory 330 and media pruner 350. The operation of these units is similar to corresponding units in the data processing device 200 of Fig. 12 is therefore not further discussed herein.

A protection applier 360 is optionally provided in the data processing device for applying differential levels of data protection to the data packets carrying the multi-view media data. This differential data protection allows the protection applier to apply a first level of data protection to data packets carrying media data of the media data subset selected by the media selector 320. Correspondingly, a second, different or multiple different levels of data protection are then applied to the data packets carrying the remainder of the media data.

An optional charging applier 370 can be arranged in the data processing device 300 for providing charging information applicable to the multi-view media data. A differentiated cost for media data from different media views is then preferably used by the charging applier 370 using the content priority identifiers. Thus, the charging applier 370 determines a first charging cost for the media data of the media data subset selected by the media selector 320. At least a second, different charging cost is correspondingly determined for the remainder of the media data.

The units 310, 320 and 350-370 of the data processing device 300 may be provided in hardware, software or a combination of hardware and software.

In Figs. 12 and 13 a combined unit, i.e. transceiver, comprising both reception and transmission functionality has been used. Alternatively, a dedicated receiver and a dedicated transmitter optionally connected, in wireless implementations, to separate receiving antenna and transmitting antenna or a combined receiving and transmitting antenna can be used.

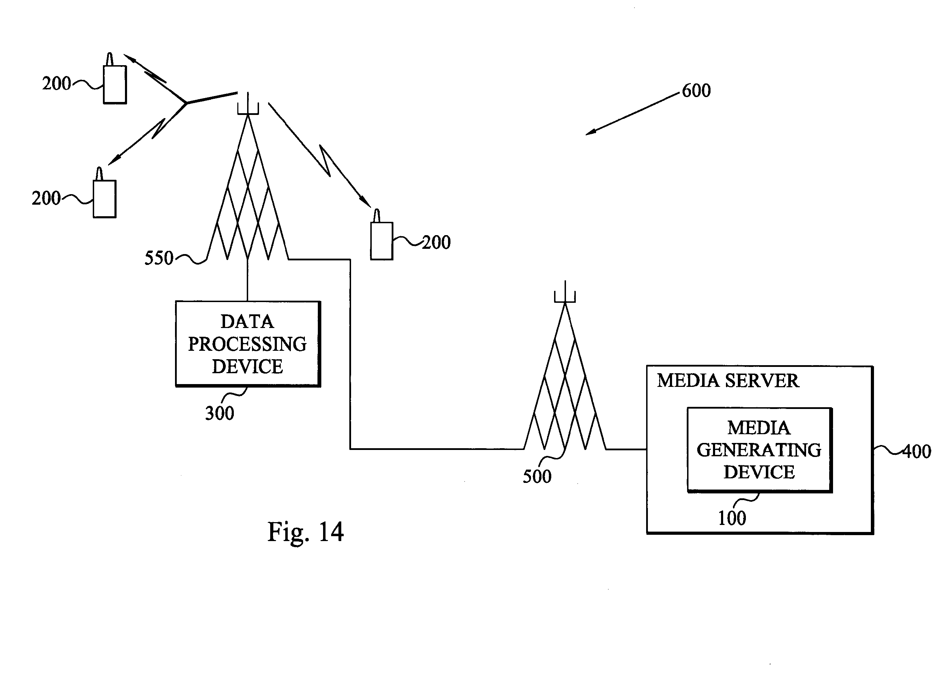

Fig. 14 is a schematic overview of a portion of a wireless communication system 600 in which embodiments may be implemented. The communication system 600 comprises one or more network nodes or base stations 500, 550 providing communication services to connected user terminals 200. At least one of the base stations 500 comprises or is connected to a media server or provider 400 comprising the media generating device 100 described above and disclosed in Fig. 5. The multi-view media data with the structural and content priority identifiers is distributed to user terminals 200 and/or other data processing devices 300 provided in the communication system 600. In such a case, the multi-view data can be transmitted, to user terminals 200, in a unicast transmission or in the form of a multicast or broadcast transmission as schematically illustrated in the figure.

It will be understood by a person skilled in the art that various modifications and changes may be made to the present invention without departure from the scope thereof, which is defined by the appended claims.

### REFERENCES

[1] ISO/IEC JTC1/SC29/WG11 - Coding of Moving Pictures and Audio, MPEG-4 Overview, July 2000
[2] ISO/IEC 14496-15:2004 - Information Technology, Coding of AudioVisual Objects, Part 15: Advanced Video Coding (AVC) File Format
[3] ISO/IEC 14496-14:2003 - Information Technology, Coding of AudioVisual Objects, Part 14: MP4 File Format
[4] 3GPP TS 26.244 V7.3.0 - 3rd Generation Partnership Project; Technical Specification Group Services and System Aspects; Transparent end-to-end packet switched streaming service (PSS); 3GPP file format, 2007
[5] ISO/IEC 14496-12:2005 - Information Technology, Coding of AudioVisual Objects, Part 12: ISO Base Media File Format
[6] ISO/IEC 14496-15, Working Draft 2.0 MVC File Format, July 2008, Hannover, Germany, Document No. 10062

## Claims

1. A method of generating multi-view media data comprising:
- providing encoded media data representative of multiple media views of a media content, each media view being associated with a structural priority identifier indicative of an encoding inter-relationship of media data of said media view relative media data of at least another media view of said multiple media views; **characterised by**
- determining, for each media view of at least a portion of said multiple media views, a content priority identifier indicative of a rendering importance level of media data of said media view for a viewer; and
- associating said content priority identifier to said media view.

2. The method according to claim 1, wherein said determining a content priority identifier comprises determining, for each media view of said multiple media views, a respective content priority identifier.

3. The method according to claim 1 or 2, wherein said determining a content priority identifier comprises determining said content priority identifier based on respective recording positions of said multiple media views relative a recorded scene.

4. The method according to any of the claims 1 to 3, further comprising:
- organizing said encoded media data of said multiple media views as at least one media track of a media container file;
- including said structural priority identifiers in said media container file,
- associating said structural priority identifiers with respective media views to which said structural priority identifiers apply;
- including said at least one content priority identifier in said media container file; and
- associating said at least one content priority identifier with a respective media view to which said content priority identifier applies.

5. The method according to claim 4, wherein said associating said at least one content priority identifier comprises storing said at least one content priority identifier together with a view identifier assigned to said associated media view.

6. A media generating device for generating multi-view media data comprising:
- a media provider for providing encoded media data representative of multiple media views of a media content, each media view being associated with a structural priority identifier indicative of an encoding inter-relationship of media data of said media view relative media data of at least another media view of said multiple media views; **characterised by**
- a priority assigner for assigning, to each media view of at least a portion of said multiple media views, a content priority identifier indicative of a rendering importance level of media data of said media view for a viewer.

7. The device according to claim 6, further comprising a priority determiner for determining, for each media view of said at least a portion of said multiple media views, said content priority identifier based on respective recording positions of said multiple media views relative a recorded scene.

8. The device according to claim 6 or 7, further comprising:
- a track organizer for organizing said encoded media data of said multiple media views as at least one media track of a media container file; and
- a priority organizer for including said structural priority identifiers in said media container file, associating said structural priority identifiers with respective media views to which the structural priority identifiers apply, including said at least one content priority identifier in said media container file, and associating said at least one content priority identifier with a respective media view to which said content priority identifier applies.

9. The device according to claim 8, wherein said priority organizer is arranged for associating said at least one content priority identifier and said structural priority identifiers with a respective media view by storing said at least one content priority identifier and said structural priority identifiers together with a view identifier assigned to said associated media view.

10. A media container file comprising:
- at least one media track comprising encoded media data representative of multiple media views of a media content;
- multiple structural priority identifiers, wherein each media view of said multiple media views has a structural priority identifier associated with it, the structural priority identifier being indicative of an encoding inter-relationship of media data of said media view relative media data of at least another media view of said multiple media views; and **characterised by**
- at least one content priority identifier, wherein each media view of at least a portion of said multiple media views has a content priority identifier associated with it, the content priority identifier being indicative of a rendering importance level of media data of said media view for a viewer.

11. The media container file according to claim 10, wherein each media view of said multiple media views has an assigned view identifier and each content priority identifier of said at least one content priority identifier is organized in said media container file together with a view identifier assigned to said associated media view.

12. A method of processing multi-view media data comprising:
- receiving encoded media data representative of multiple media views of a media content, each media view being associated with a structural priority identifier indicative of an encoding inter-relationship of media data of said media view relative media data of at least another media view of said multiple media views, and **characterised by** each media view of at least a portion of said multiple media views being associated with a content priority identifier indicative of a rendering importance level of media data of said media view for a viewer; and
- selecting a media data subset of said media data of said multiple media views for processing based on said at least one content priority identifier.

13. The method according to claim 12, wherein said selecting step comprises selecting said media data subset for processing based on said structural priority identifiers and said at least one content priority identifier.

14. The method according to claim 12 or 13, further comprising pruning said selected media data subset from said encoded media data.

15. The method according to any of the claims 12 to 14, further comprising decoding and rendering said selected media data subset.

16. The method according to any of the claims 12 to 15, further comprising:
- applying a first level of data protection to said selected media data subset; and
- applying a second, different level of data protection to remaining media data not comprises in said selected media data subset.

17. A data processing device for processing multi-view media data comprising:
- a receiver for receiving encoded media data representative of multiple media views of a media content, each media view being associated with a structural priority identifier indicative of an encoding inter-relationship of media data of said media view relative media data of at least another media view of said multiple media views **characterised by** and each media view of at least a portion of said multiple media views being associated with a content priority identifier indicative of a rendering importance level of media data of said media view for a viewer; and
- a media selector for selecting a media data subset of said media data of said multiple media views for processing based on said at least one content priority identifier.

18. The device according to claim 17, wherein said media selector is arranged for selecting said media data subset for processing based on said structural priority identifiers and said at least one content priority identifier.

19. The device according to claim 17 or 18, further comprising a media pruner for pruning said selected media data subset from said encoded media data.

20. The device according to any of the claims 17 to 19, further comprising a decoder for decoding said selected media data subset and a media player for rendering said decoded, selected media data subset.

21. The device according to any of the claims 17 to 20, further comprising a protection applier for applying a first level of data protection to said selected media data subset, and applying a second, different level of data protection to remaining media data not comprises in said selected media data subset.

## Patentansprüche

1. Verfahren zur Erzeugung von Mehransichtsmediendaten, umfassend:
- Bereitstellen von codierten Mediendaten, die mehrere Medienansichten eines Medieninhalts darstellen, wobei jede Medienansicht mit einer Strukturprioritätskennung assoziiert ist, die eine Codierungs-Wechselbeziehung von Mediendaten der Medienansicht in Bezug auf Mediendaten mindestens einer anderen Medienansicht der mehreren Medienansichten anzeigt; **gekennzeichnet durch**:
- Bestimmen für jede Medienansicht mindestens eines Teils der mehreren Medienansichten einer Inhaltsprioritätskennung, die einen Wiedergabe-Bedeutungsgrad von Mediendaten der Medienansicht für einen Betrachter anzeigt; und
- Assoziieren der Inhaltsprioritätskennung mit der Medienansicht.

2. Verfahren nach Anspruch 1, wobei das Bestimmen einer Inhaltsprioritätskennung ein Bestimmen für jede Medienansicht der mehreren Medienansichten einer jeweiligen Inhaltsprioritätskennung umfasst.

3. Verfahren nach Anspruch 1 oder 2, wobei das Bestimmen einer Inhaltsprioritätskennung ein Bestimmen der Inhaltsprioritätskennung basierend auf jeweiligen Aufzeichnungspositionen der mehreren Medienansichten in Bezug auf eine aufgezeichnete Szene umfasst.

4. Verfahren nach einem der Ansprüche 1 bis 3, ferner umfassend:
- Organisieren der codierten Mediendaten der mehreren Medienansichten als mindestens eine Medienspur einer Mediencontainerdatei;
- Aufnehmen der Strukturprioritätskennungen in die Mediencontainerdatei;
- Assoziieren der Strukturprioritätskennungen mit jeweiligen Medienansichten, für welche die Strukturprioritätskennungen gelten;
- Aufnehmen der mindestens einen Inhaltsprioritätskennung in die Mediencontainerdatei;
- Assoziieren der mindestens einen Inhaltsprioritätskennung mit einer jeweiligen Medienansicht, für welche die Inhaltsprioritätskennung gilt.

5. Verfahren nach Anspruch 4, wobei das Assoziieren der mindestens einen Inhaltsprioritätskennung ein Speichern der mindestens einen Inhaltsprioritätskennung zusammen mit einer der assoziierten Medienansicht zugeordneten Ansichtskennung umfasst.

6. Medienerzeugungsvorrichtung zum Erzeugen von Mehransichtsmediendaten, umfassend:
- eine Medienbereitstellungseinrichtung zum Bereitstellen von codierten Mediendaten, die mehrere Medienansichten eines Medieninhalts darstellen, wobei jede Medienansicht mit einer Strukturprioritätskennung assoziiert ist, die eine Codierungs-Wechselbeziehung von Mediendaten der Medienansicht in Bezug auf Mediendaten mindestens einer anderen Medienansicht der mehreren Medienansichten anzeigt; **gekennzeichnet durch**:
- eine Prioritätszuordnungseinrichtung zum Zuordnen zu jeder Medienansicht mindestens eines Teils der mehreren Medienansichten einer Inhaltsprioritätskennung, die einen Wiedergabe-Bedeutungsgrad von Mediendaten der Medienansicht für einen Betrachter anzeigt.

7. Vorrichtung nach Anspruch 6, ferner umfassend eine Prioritätsbestimmungseinrichtung zum Bestimmen für jede Medienansicht des mindestens einen Teils der mehreren Medienansichten der Inhaltsprioritätskennung basierend auf jeweiligen Aufzeichnungsposition der mehreren Medienansichten in Bezug auf eine aufgezeichnete Szene.

8. Vorrichtung nach Anspruch 6 oder 7, ferner umfassend:
- einen Spurenorganisator zum Organisieren der codierten Mediendaten der mehreren Medienansichten als mindestens eine Medienspur einer Mediencontainerdatei; und
- einen Prioritätsorganisator zum Aufnehmen der Strukturprioritätskennungen in die Mediencontainerdatei, Assoziieren der Strukturprioritätskennung mit jeweiligen Medienansichten, für welche die Strukturprioritätskennung gilt, Aufnehmen der mindestens einen Inhaltsprioritätskennung in die Mediencontainerdatei und Assoziieren der mindestens einen Inhaltsprioritätskennung mit einer jeweiligen Medienansicht, für welche die Inhaltsprioritätskennung gilt.

9. Vorrichtung nach Anspruch 8, wobei der Prioritätsorganisator zum Assoziieren der mindestens einen Inhaltsprioritätskennung und der Strukturprioritätskennungen mit einer jeweiligen Medienansicht durch Speichern der mindestens einen Inhaltsprioritätskennung und der Strukturprioritätskennungen zusammen mit einer der assoziierten Medienansicht zugeordneten Ansichtskennung ausgelegt ist.

10. Mediencontainerdatei, umfassend:
- mindestens eine Medienspur, die codierte Mediendaten umfasst, die mehrere Medienansichten eines Medieninhalts darstellen;
- mehrere Strukturprioritätskennungen, wobei jede Medienansicht der mehreren Medienansichten eine Strukturprioritätskennung damit assoziiert aufweist, wobei die Strukturprioritätskennung eine Codierungs-Wechselbeziehung von Mediendaten der Medienansicht in Bezug auf Mediendaten mindestens einer anderen Medienansicht der mehreren Medienansichten anzeigt; **gekennzeichnet durch**:
- mindestens eine Inhaltsprioritätskennung, wobei jede Medienansicht mindestens eines Teils der mehreren Medienansichten eine Inhaltsprioritätskennung damit assoziiert aufweist, wobei die Inhaltsprioritätskennung einen Wiedergabe-Bedeutungsgrad von Mediendaten der Medienansicht für einen Betrachter anzeigt.

11. Mediencontainerdatei nach Anspruch 10, wobei jede Medienansicht der mehreren Medienansichten eine Ansichtskennung zugeordnet aufweist, und jede Inhaltsprioritätskennung der mindestens einen Inhaltsprioritätskennung in einer Mediencontainerdatei zusammen mit einer der assoziierten Medienansicht zugeordneten Ansichtskennung organisiert ist.

12. Verfahren zur Verarbeitung von Mehransichtsmediendaten, umfassend:
- Empfangen von codierten Mediendaten, die mehrere Mediendaten eines Medieninhalts darstellen, wobei jede Medienansicht mit einer Strukturprioritätskennung assoziiert ist, die eine Codierungs-Wechselbeziehung von Mediendaten der Medienansicht in Bezug auf Mediendaten mindestens einer anderen Medienansicht der mehreren Medienansichten anzeigt, und **dadurch gekennzeichnet, dass** jede Medienansicht mindestens eines Teils der mehreren Medienansichten mit einer Inhaltsprioritätskennung assoziiert ist, die einen Wiedergabe-Bedeutungsgrad von Mediendaten der Medienansicht für einen Betrachter anzeigt; und
- Auswählen einer Mediendaten-Teilmenge der Mediendaten der mehreren Medienansichten zur Verarbeitung basierend auf der mindestens einen Inhaltsprioritätskennung.

13. Verfahren nach Anspruch 12, wobei der Auswählschritt ein Auswählen der Mediendaten-Teilmenge zur Verarbeitung basierend auf den Strukturprioritätskennungen und der mindestens einen Inhaltsprioritätskennung umfasst.

14. Verfahren nach Anspruch 12 oder 13, ferner umfassend ein Ausschneiden der ausgewählten Mediendaten-Teilmenge aus den codierten Mediendaten.

15. Verfahren nach einem der Ansprüche 12 bis 14, ferner umfassend ein Decodieren und Wiedergeben der ausgewählten Mediendaten-Teilmenge.

16. Verfahren nach einem der Ansprüche 12 bis 15, ferner umfassend:
- Anwenden eines ersten Datenschutzgrads auf die ausgewählte Mediendaten-Teilmenge; und
- Anwenden eines zweiten, anderen Datenschutzgrads auf die restlichen Mediendaten, die nicht in der ausgewählten Mediendaten-Teilmenge enthalten sind.

17. Datenverarbeitungsvorrichtung zum Verarbeiten von Mehransichtsmediendaten, umfassend:
- einen Empfänger zum Empfangen von codierten Mediendaten, die mehrere Medienansichten eines Medieninhalts darstellen, wobei jede Medienansicht mit einer Strukturprioritätskennung assoziiert ist, die eine Codierungs-Wechselbeziehung von Mediendaten der Medienansicht in Bezug auf Mediendaten mindestens einer anderen Medienansicht der mehreren Medienansichten anzeigt, und **dadurch gekennzeichnet, dass** jede Medienansicht mindestens eines Teils der mehreren Medienansichten mit einer Inhaltsprioritätskennung assoziiert ist, die einen Wiedergabe-Bedeutungsgrad von Mediendaten der Medienansicht für einen Betrachter anzeigt; und
- eine Medienauswähleinrichtung zum Auswählen einer Mediendaten-Teilmenge der Mediendaten der mehreren Medienansichten zur Verarbeitung basierend auf der mindestens einen Inhaltsprioritätskennung.

18. Vorrichtung nach Anspruch 17, wobei die Medienauswähleinrichtung zum Auswählen der Mediendaten-Teilmenge zur Verarbeitung basierend auf den Strukturprioritätskennungen und der mindestens einen Inhaltsprioritätskennung ausgelegt ist.

19. Vorrichtung nach Anspruch 17 oder 18, ferner umfassend eine Medienausschneideeinrichtung zum Ausschneiden der ausgewählten Mediendaten-Teilmenge aus den codierten Mediendaten.

20. Vorrichtung nach einem der Ansprüche 17 bis 19, ferner umfassend einen Decoder zum Decodieren der ausgewählten Mediendaten-Teilmenge und eine Medienwiedergabeeinrichtung zum Wiedergeben der decodierten ausgewählten Mediendaten-Teilmenge.

21. Vorrichtung nach einem der Ansprüche 17 bis 20, ferner umfassend eine Schutzanwendungseinrichtung zum Anwenden eines ersten Datenschutzgrads auf die ausgewählte Mediendaten-Teilmenge und Anwenden eines zweiten, anderen Datenschutzgrads auf die restlichen Mediendaten, die nicht in der ausgewählten Mediendaten-Teilmenge enthalten sind.

## Revendications

1. Procédé de génération de données média de multi-visualisation comprenant de :
- fournir des données média codées représentatives de visualisations média multiples d'un contenu média, chaque visualisation média étant associée à un identifiant de propriété structurel indicatif d'une inter-relation de codage de données média desdites données média relatives à la visualisation média d'au moins une autre visualisation de média desdites visualisations média multiples ; **caractérisé par**
- déterminer, pour chaque visualisation média d'au moins une portion desdites visualisations média multiples, un identifiant de priorité de contenu indicatif d'un niveau d'importance de rendu des données média de ladite visualisation média pour un spectateur ; et
- associer ledit identifiant de priorité de contenu à ladite visualisation média.

2. Procédé selon la revendication 1, dans lequel ladite détermination d'un identifiant de priorité de contenu comprend de déterminer pour chaque visualisation média desdites visualisations média multiples, un identifiant de priorité de contenu respectif.

3. Procédé selon la revendication 1 ou 2, dans lequel ladite détermination d'un identifiant de priorité de contenu comprend de déterminer ledit identifiant de priorité de contenu sur la base des positions d'enregistrement respectives desdites visualisations média multiples relatives à une scène enregistrée.

4. Procédé selon une quelconque des revendications 1 à 3, comprenant en outre de :
- organiser lesdites données média codées desdites visualisations média multiples comme au moins un suivi média d'un fichier de contenant média ;
- inclure lesdits identifiants de priorité structurels dans ledit fichier de contenant média ;
- associée lesdits identifiants de priorité structurels à des visualisations média respectives auxquelles lesdits identifiants de priorité structurel s'appliquent ;
- inclure ledit au moins un identifiant de priorité de contenu dans ledit fichier de contenant média ; et
- associer ledit au moins un identifiant de priorité de contenu à une visualisation média respectives à laquelle ledit identifiant de priorité de contenu s'applique.

5. Procédé selon la revendication 4, dans lequel ladite association d'au moins un identifiant de priorité de contenu comprend de mémoriser ledit au moins un identifiant de priorité de contenu conjointement à un identifiant de visualisation assigné à ladite visualisation média associée.

6. Dispositif de génération de média pour générer des données média de multi-visualisation comprenant :
- un fournisseur de média pour fournir des données média codées représentatives de visualisations média multiples d'un contenu média, chaque visualisation média étant associée à un identifiant de priorité structurel indicatif d'une inter-relation de codage de données média desdites données média relatives à ladite visualisation média d'au moins une autre visualisation média desdites visualisations média multiples **caractérisé par**;
- un assignateur de priorité pour assigner, à chaque visualisation média d'au moins une portion desdites visualisations média multiples, un identifiant de priorité de contenu indicatif d'un niveau d'importance de rendu des données média de ladite visualisation média pour un spectateur.

7. Dispositif selon la revendication 6, comprenant en outre un déterminateur de priorité pour déterminer, pour chaque visualisation média d'au moins une portion desdites visualisations média multiples, ledit identifiant de priorité de contenu sur la base des positions d'enregistrement respectives desdites visualisations média multiples relatives à une scène enregistrée.

8. Dispositif selon la revendication 6 ou 7, comprenant en outre :
- un organisateur de suivi pour organiser lesdites données média codées desdites visualisations média multiples comme au moins un suivi média d'un fichier de contenant média ; et
- un organisateur de priorité pour inclure lesdites identifiants de priorité structurels dans ledit fichier de contenant média, associer lesdits identifiants de priorité structurels à des visualisations média respectives auxquelles les identifiants de priorité structurels s'appliquent, inclure ledit au moins un identifiant de priorité de contenu dans ledit fichier de contenant média, et associer ledit au moins un identifiant de priorité de contenu à une visualisation média respective à laquelle ledit identifiant de priorité de contenu s'applique.

9. Dispositif selon la revendication 8, dans lequel ledit organisateur de priorité est agencé pour associer ledit au moins un identifiant de priorité de contenu et lesdits identifiants de priorité structurels à une visualisation média respective en mémorisant ledit au moins un identifiant de priorité de contenu et lesdites identifiants de priorité structurels conjointement à un identifiant de visualisation assigné à ladite visualisation média associée.

10. Fichier de contenant de média comprenant :
- au moins un suivi média comprenant des données média codées représentatives de visualisations média multiples d'un contenu média ;
- des identifiants de priorité structurels multiples, dans lequel chaque visualisation média desdites visualisations média multiples a un identifiant de priorité structurel qui lui est associé, l'identifiant de priorité structurel étant indicatif d'une inter-relation de codage de données média desdites données média relatives à la visualisation média d'au moins une autre visualisation média desdites visualisations média multiples ; et **caractérisé par**
- au moins un identifiant de priorité de contenu, dans lequel chaque visualisation média d'au moins une portion desdites visualisations média multiples a un identifiant de priorité de contenu qui lui est associé, l'identifiant de priorité de contenu étant indicatif d'un niveau d'importance de rendu des données média de ladite visualisation média pour un spectateur.

11. Fichier de contenant média selon la revendication 10, dans lequel chaque visualisation média desdites visualisations média multiples a un identifiant de visualisation assigné et chaque identifiant de priorité de contenu d'au moins un identifiant de priorité de contenu est organisé dans ledit fichier de contenant de média conjointement à un identifiant de visualisation assigné à ladite visualisation média associée.

12. Procédé de traitement de données média de multi-visualisation comprenant de :
- recevoir des données média codées représentatives de visualisations média multiples d'un contenu média, chaque visualisation média étant associée à un identifiant de priorité structurel indicatif d'une inter-relation de codage des données média desdites données média relatives à une visualisation média d'au moins une autre visualisation média desdites multiples visualisations média, et **caractérisé par** chaque visualisation média d'au moins une portion desdites visualisations média multiples étant associé à un identifiant de priorité de contenu indicatif d'un niveau d'importance de rendu des données média de ladite visualisation média pour un spectateur ; et
- sélectionner un sous-ensemble de données média desdites données média desdites visualisations média multiples en vue d'une traitement basé sur au moins un identifiant de priorité de contenu.

13. Procédé selon la revendication 12, dans lequel ladite étape de sélection comprend de sélectionner ledit sous-ensemble de données média en vue d'un traitement basé sur lesdits identifiants de priorité structurels et ledit au moins un identifiant de priorité de contenu.

14. Procédé selon la revendication 12 ou 13, comprenant en outre d'élaguer desdites données média codées ledit sous-ensemble de données média sélectionné.

15. Procédé selon une quelconque des revendications 12 à 14, comprenant en outre de décoder et rendre ledit sous-ensemble de données média sélectionné.

16. Procédé selon une quelconque des revendications 12 à 15, comprenant en outre de :
- appliquer un premier niveau de protection de données audit sous-ensemble de données média sélectionné ; et
- appliquer un second niveau différent de protection de données aux données média restantes non comprises dans ledit sous-ensemble de données média sélectionné.

17. Dispositif de traitement de données pour traiter des données média de multi-visualisation comprenant :
- un récepteur pour recevoir des données média codées représentatives de visualisations média multiples d'un contenu média, chaque visualisation média étant associée à un identifiant de priorité structurel indicatif d'une inter-relation de codage des données média desdites données média relatives à une visualisation média d'au moins une autre visualisation média desdites visualisations média multiples et **caractérisé par** chaque visualisation média d'au moins une portion desdites visualisations média multiples étant associée à un identifiant de priorité de contenu indicatif d'un niveau d'importance de rendu des données média de ladite visualisation média pour un spectateur ; et
- un sélecteur de média pour sélectionner un sous-ensemble de données média desdites données média desdites visualisations média multiples en vue d'un traitement basé sur au moins un identifiant de priorité de contenu.

18. Dispositif selon la revendication 17, dans lequel ledit sélecteur de média est agencé pour sélectionner ledit sous-ensemble de données média en vue d'un traitement basé sur lesdits identifiants de priorité structurels et ledit au moins un identifiant de priorité de contenu.

19. Dispositif selon la revendication 17 ou 18, comprenant en outre un élagueur de média pour élaguer desdites données média codées ledit sous-ensemble de données média sélectionné.

20. Dispositif selon une quelconque des revendications 17 à 19, comprenant en outre un décodeur pour décodeur ledit sous-ensemble de données média sélectionné et un lecteur de média pour rendre ledit sous-ensemble de données média sélectionné, décodé.

21. Dispositif selon une quelconque des revendications 17 à 20, comprenant en outre un applicateur de protection pour appliquer un premier niveau de protection de données audit sous-ensemble de données média sélectionné, et appliquer un second niveau différent de protection de données auxdites données média restantes non comprises dans ledit sous-ensemble de données média sélectionné.
